# EUROPÄISCHE PATENTANMELDUNG

(11) **EP 1 006 425 A2**
(43) Veröffentlichungstag der Anmeldung: **07.06.2000**
(21) Anmeldenummer: 99122184.7
(22) Anmeldetag: 06.11.1999
(51) Int. Cl.: G06F 1/18

(54) **Geräteanordnung mit einem PC-basierten Gerät**

(30) Priorität: 02.12.1998 DE 19855659
(71) Anmelder: Siemens Nixdorf Retail and Banking Systems GmbH, 33106 Paderborn (DE)
(72) Erfinder: Baitz, Günter, 13629 Berlin (DE)

(57) **Zusammenfassung**

Geräteanordnung (40'), umfassend ein PC-basiertes Gerät (10) mit einem eine Basiswand aufweisenden Gehäuse, in dessen vorderem, einem Benutzer zugewandten Bereich ein stufenförmiger Absatz für die Aufnahme wenigstens eines ein Peripheriegerät (44; 46; 48) einschließenden Zusatzgehäuses (46'; 48') vorgesehen ist, wobei eine erste Fläche (18) des Absatzes parallel zu der Basiswand und eine zweite Fläche des Absatzes senkrecht zu dieser ausgerichtet ist, sowie ein zur Anordnung auf dem Absatz bestimmtes Peripheriegerät (44; 46; 48).

## Beschreibung

Die Erfindung betrifft eine Geräteanordnung mit einem PC-basierten Gerät.

Eine Geräteanordnung der vorgenannten Art kann beispielsweise eine Registrierkasse oder auch ein betriebsfertiger Personal Computer sein. In jedem Fall besteht die Geräteanordnung aus einem PC-basierten elektronischen Grundgerät, das je nach Anwendungsfall mit unterschiedlicher Peripherieausstattung versehen ist. Die einzelnen Peripheriegeräte sind unabhängig vom Grundgerät frei angeordnet und über Kabel mit letzterem verbunden.

Als nachteilig wird zum einen die freie räumliche Anordnung der einzelnen Komponenten der Geräteanordnung empfunden, die eine versand- und betriebsfertige Konfigurierung der Geräteanordnung beim Hersteller erschwert. Unbefriedigend ist auch die freie und damit chaotische Kabelführung am Einsatzort der Geräteanordnung.

Aufgabe der Erfindung ist es daher, eine Geräteanordnung vorzuschlagen, die die genannten Nachteile vermeidet.

Die Aufgabe wird durch die Merkmale des Anspruchs 1 erfüllt.

Die Geräteanordnung umfaßt ein PC-basiertes Gerät mit einem eine Basiswand aufweisenden Gehäuse, in dessen vorderem, einem Benutzer zugewandten Bereich ein stufenförmiger Absatz für die Aufnahme wenigstens eines zumindest ein Peripheriegerät einschließenden Zusatzgehäuses vorgesehen ist, wobei eine erste Fläche des Absatzes parallel zu der Basiswand und eine zweite Fläche des Absatzes senkrecht zu dieser ausgerichtet ist, sowie ein zur Anordnung auf dem Absatz bestimmtes Peripheriegerät. Damit ist es möglich, ein Peripheriegerät fest dem PC-basierten Gerät zuzuordnen, ohne daß eine Montage- oder Transport-platte erforderlich wäre.

Vorteilhafterweise erstreckt sich der Absatz über die gesamte Breite des Gehäuses. Der dadurch zur Verfügung stehende Platz erlaubt dann auch die Anordnung mehrerer Peripheriegeräte nebeneinander.

Bei einer ersten Ausführungsform weist die Geräteanordnung eine die Basiswand des PC-basierten Gerätes vollständig überdeckenden Haube auf, wobei die erste und/oder die zweite Fläche des Absatzes integraler Bestandteil der Haube ist. In diesem Fall ist die Montage des Gerätes besonders einfach.

Bei einer zweiten Ausführungsform weist die Geräteanordnung eine die Basiswand des PC-basierten Gerätes überdekkende Haube auf, die nur den dem Ausschnitt fernen Teil des Gerätes überdeckt, wobei die erste und/oder die zweite Fläche des Absatzes mit der Basiswand verbunden ist. In diesem Fall bleiben die nachfolgend beschriebenen Elemente einer Datenverbindung zwischen dem PC-basierten Gerät und dem Peripheriegerät auch bei abgenommener Haube in ihrer Position und müssen nicht jedesmal nach dem Abnehmen der Haube neu justiert werden.

Die Datenverbindung zwischen dem PC-basierten Gerät und dem Peripheriegerät kann drahtlos, beispielsweise als Infrarot- oder Funkverbindung ausgebildet sein. Dabei ist ein dem Peripheriegerät zugeordneter erster Sender/Emfänger in einer Wand des Zusatzgehäuses und ein dem PC-basierten Gerät zugeordneter zweiter Sender/Emfänger in der dieser Wand des Zusatzgehäuses benachbarten Fläche des Absatzes angeordnet.

Die Datenverbindung zwischen dem PC-basierten Gerät und dem Peripheriegerät kann aber auch leitungsgebundenen sein. Dabei kann ein dem Peripheriegerät zugeordneter Datenstecker in eine Wand des Zusatzgehäuses und ein Gegenstecker in eine dieser Wand des Zusatzgehäuses benachbarten Fläche des Absatzes eingebaut sein. Beim Einbringen des Peripheriegerätes in seine vorbestimmte Position auf dem Absatz finden sich der Datenstecker und der Gegenstecker automatisch.

Die Erfindung läßt aber auch eine alternative Ausführungsform der leitungsgebundenen Datenverbindung zwischen dem PC-basierten Gerät und dem Peripheriegerät zu, wozu in den dem Absatz fernen Bereich des PC-basierten Gerätes ein von der Haube überdeckbarer oder überdeckter Kabelkanal eingeformt ist, durch welchen hindurch eine Datenleitung des Peripheriegerätes zu einem Datenstecker des PC-basierten Gerätes geführt werden kann.

Als Peripheriegeräte kommen, ohne daß die folgende Aufzählung erschöpfend wäre, ein Sichtgerät oder ein Drucker oder ein Markierungsleser oder eine Tastatur in Betracht. In Weiterbildung der Erfindung ist auf dem Absatz bei den Seitenwänden des PC-basierten Gerätes je ein Lautsprecher angeordnet. Damit wird die Geräteanordnung für die akustische Kommunikation vorbereitet.

Die erfindungsgemäße Geräteanordnung ist gleichermaßen für die Aufstellung auf einem Tisch wie auch für die Wandmontage geeignet: Im ersten Fall wird das PC-basierte Gerät mit seiner Basisplatte so auf einem Tisch aufgestellt, daß die erste Fläche des Absatzes die Stützfläche für das wenigstens eine Peripheriegerät ist. Im zweiten Fall wird das PC-basierte Gerät mit seiner Basisplatte an einer Wand befestigt und die zweite Fläche des Absatzes ist die Stützfläche für das wenigstens eine Peripheriegerät.

Gemäß einer bevorzugten Weiterbildung der Erfindung ist das wenigstens eine Peripheriegerät über eine lösbare Verriegelungseinrichtung auf der dieses stützenden Fläche des Absatzes fixierbar. Ein versehentliches Herunterstoßen eines Peripheriegerätes von dem Absatz wird dadurch unterbunden.

Nachfolgend werden Ausführungsbeispiele der Erfindung in Verbindung mit den beigefügten Zeichnungen erläutert. Es zeigt
- Fig. 1: ein PC-basiertes Gerät mit abgenommener Haube in perspektivischer Draufsicht von vorne,
- Fig. 2: ein erstes Ausführungsbeispiel einer Geräteanordnung in perspektivischer Draufsicht von vorne,
- Fig. 3: ein zweites Ausführungsbeispiel einer Geräteanordnung in perspektivischer Draufsicht von vorne,
- Fig. 4: ein drittes Ausführungsbeispiel einer Geräteanordnung in perspektivischer Vorderansicht,
- Fig. 5: die Geräteanordnung nach Fig. 4 in Seitenansicht.

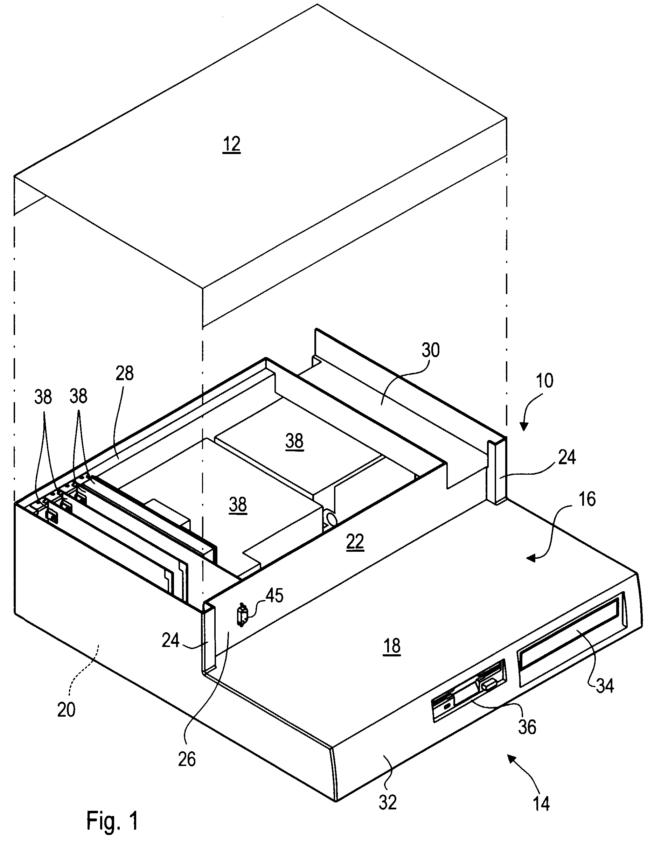

In Fig. 1 ist ein PC-basiertes Gerät 10 mit abgenommener Haube 12 in perspektivischer Draufsicht dargestellt. In den vorderen, einem Benutzer zugewandten Bereich des PC-basierten Gerätes 10, also auf dessen Vorderseite 14, ist ein stufenförmiger Absatz 16 eingeformt, wobei eine erste Fläche 18 des Absatzes 16 parallel zu einer Basiswand 20 des PC-basierten Gerätes 10 und eine zweite Fläche 22 des Absatzes 16 senkrecht zu dieser ausgerichtet ist. Die zweite Fläche 22 ist seitlich durch senkrechte Rippen 24 begrenzt, so daß bei auf das PC-basierte Gerät 10 aufgesetzter Haube 12 vor der zweiten Fläche 22 ein Hohlraum 26 entsteht. Von der zweiten Fläche 22 zur Rückwand 28 des PC-basierten Gerätes 10 verläuft ein Kabelkanal 30, der von der Haube 12 überdeckt wird. In die Vorderwand 32 des PC-basierten Gerätes 10 sind ein CD-ROM-Laufwerk 34 und ein Diskettenlaufwerk 36 eingebaut. Diese Ausstattung ist nur beispielhaft zu verstehen, jede andere PC-übliche Ausstattung ist möglich. Gleiches gilt für die Ausstattung des PC-basierten Gerätes 10 mit elektronischen Baugruppen, die hier allgemein mit 38 bezeichnet sind.

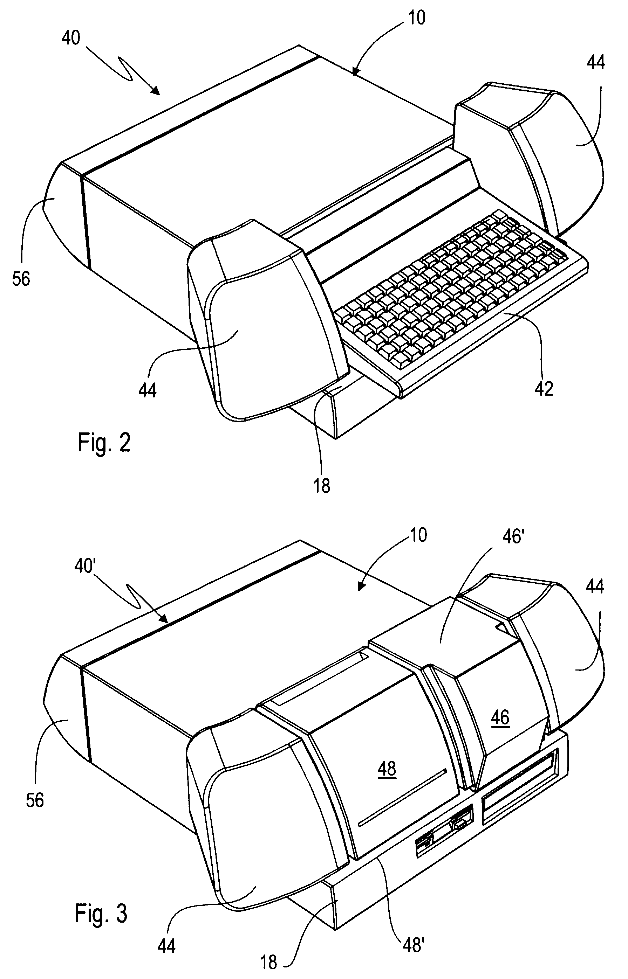

Fig. 2 zeigt ein erstes Ausführungsbeispiel einer Geräteanordnung 40 in perspektivischer Draufsicht von vorne. Das PC-basierte Gerät 10 ist als Auftischgerät eingesetzt, d.h. es steht mit seiner Basiswand 20 auf einer nicht dargestellten horizontalen Stellfläche, beispielsweise einem Tisch.

Auf der ersten Fläche 18 des PC-basierten Gerätes 10 ist eine Tastatur 42 und rechts und links von dieser je ein Lautsprecher 44 aufgestellt. Letztere sind über ein nicht dargestelltes Lautsprecherkabel mit einem in die zweite Fläche 22 des Absatzes 16 eingebauten Stecker 45 (Fig. 1) verbunden. Die Lautsprecher 44 stehen seitlich über das PC-basierte Gerät 10 über. Dies hat den Vorteil einer vergrößerten akustischen Basis bei Stereowiedergabe. Die Gehäuse der Lautsprecher 44 können aber auch seitlich mir dem PC-basierten Gerät 10 abschließen, wodurch die Geräteanordnung 40 einen besonders kompakten Aufbau erhält.

Die Lautsprecherkabel sind in dem Hohlraum 26 verlegt und auf den Lautsprecherstecker 45 aufgesteckt. Da die Tastatur 42 sowohl auf dem Absatz 16 stehend als auch beliebig auf der Fläche des PC-basierten Gerätes 10 aufgestellt betreibbar sein soll, ist sie vorteilhaft über eine drahtlose Datenverbindung mit dem PC-basierten Gerät 10 verbunden. Diese drahtlose Datenverbindung kann z.B. in Infrarot- oder Funktechnik ausgeführt sein.

Fig. 3 zeigt ein zweites Ausführungsbeispiel einer Geräteanordnung 40' in perspektivischer Draufsicht von vorne. Das PC-basierte Gerät 10 ist wiederum als Auftischgerät eingesetzt. Auf der ersten Fläche 18 des PC-basierten Gerätes 10 ist ein Drucker 46 und neben diesem ein Belegleser 48 angeordnet. Rechts und links der Peripheriegeräte Anordnung 46, 48 ist wiederum je ein Lautsprecher 44 aufgestellt. Es ist zu erkennen, daß der Drucker 46 und der Belegleser 48 jeweils in einem eigenständigen Zusatzgehäuse 46', 48' untergebracht ist, so daß beide autonome Peripheriegeräte bilden. Die beschriebene Peripheriegeräte-Anordnung 46, 48 ist nur beispielhaft zu verstehen. Es kann auch nur ein einzelnes Peripheriegerät zum Einsatz kommen. Die in Fig. 3 gezeigte Geräteanordnung 40' kann z.B. als sogenanntes Lottoterminal eingesetzt werden, bei dem ein von Hand ausgefüllter Lottoschein mit dem Belegleser 48 erfaßt und anschließend mit dem Drucker 46 eine Quittung erstellt wird.

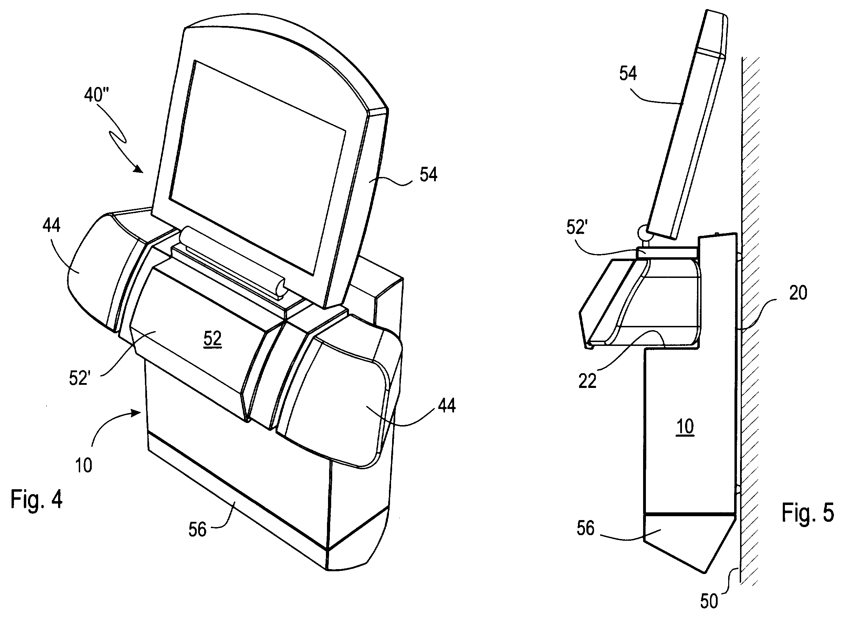

Fig. 4 zeigt ein drittes Ausführungsbeispiel einer Geräteanordnung 40'' in perspektivischer Vorderansicht und Fig. 5 in Seitenansicht. Das PC-basierte Gerät 10 ist hier als Wandgerät eingesetzt, d.h. es ist mit seiner Basiswand 20 an einer vertikalen Fläche 50 befestigt. Fig. 5 zeigt, daß die zweite Fläche 22 des PC-basierten Gerätes 10 nun als Stützfläche für ein Zusatzgehäuse 52' dient. Dieses umschließt einen zweiten, DIN A4-breiten Drucker 52, auf dem ein Sichtgerät 54 befestigt ist. Zu beiden Seiten des zweiten Druckers 52 ist wiederum je ein Lautsprecher 44 angeordnet. Eine Geräteanordnung 40'' entsprechend Fig. 4 ist beispielsweise als Auskunftsterminal in Warenhäusern oder öffentlichen Gebäuden, als öffentliches Telefaxgerät oder auch als öffentliches Internet-Terminal einsetzbar.

Den Figuren 2 bis 5 ist zu entnehmen, daß die Rückwand 28 des PC-basierten Gerätes 10 mit einer lösbaren Abdeckung 56 überdeckt ist. Unter dieser ergibt sich ein Steckeranschluß- und Kabelrangierraum für üblicherweise auf der Rückseite PC-basierter Geräte angeordnete elektrische Anschlüsse.

Das wenigstens eine Peripheriegerät 44, 46, 48 bzw. 52 ist über eine lösbare Verriegelungseinrichtung auf der dieses stützenden Fläche 18 bzw. 22 des Absatzes 16 fixierbar. Geeignete Verriegelungseinrichtungen sind in großer Zahl bekannt, weshalb auf eine Beschreibung verzichtet wird.

## Patentansprüche

1. Geräteanordnung (40), umfassend ein PC-basiertes Gerät (10) mit einem eine Basiswand (20) aufweisenden Gehäuse, in dessen vorderem, einem Benutzer zugewandten Bereich ein stufenförmiger Absatz (16) für die Aufnahme wenigstens eines zumindest ein Peripheriegerät (44; 46; 48; 52) einschließenden Zusatzgehäuses (46'; 48'; 52') vorgesehen ist, wobei eine erste Fläche (18) des Absatzes (16) parallel zu der Basiswand (20) und eine zweite Fläche (22) des Absatzes (16) senkrecht zu dieser ausgerichtet ist, sowie ein zur Anordnung auf dem Absatz bestimmtes Peripheriegerät (44; 46; 48; 52).

2. Geräteanordnung nach Anspruch 1, bei der sich der Absatz (16) über die gesamte Breite des Gehäuses erstreckt.

3. Geräteanordnung nach Anspruch 1 oder 2 mit einer die Basiswand (20) des PC-basierten Gerätes (10) vollständig überdeckenden Haube (12), wobei die erste und/oder die zweite Fläche des Absatzes integraler Bestandteil der Haube ist.

4. Geräteanordnung nach Anspruch 1 oder 2 mit einer die Basiswand (20) des PC-basierten Gerätes (10) überdekkenden Haube (12), wobei die erste (18) und/oder die zweite Fläche (22) des Absatzes mit der Basiswand (20) verbunden ist.

5. Geräteanordnung nach einem der Ansprüche 1 bis 4 mit einer drahtlosen Datenverbindung zwischen dem PC-basierten Gerät (10) und dem Peripheriegerät (42), wobei ein dem Peripheriegerät (42) zugeordneter erster Sender/Emfänger in einer Wand des Zusatzgehäuses und ein dem PC-basierten Gerät (10) zugeordneter zweiter Sender/Emfänger in einer dieser Wand des Zusatzgehäuses benachbarten Fläche des Absatzes angeordnet ist.

6. Geräteanordnung nach einem der Ansprüche 1 bis 4 mit einer leitungsgebundenen Datenverbindung zwischen dem PC-basierten Gerät und dem Peripheriegerät, wobei ein dem Peripheriegerät zugeordneter Datenstecker in eine Wand des Zusatzgehäuses und ein Gegenstecker in eine dieser Wand des Zusatzgehäuses benachbarten Fläche des Absatzes eingebaut ist.

7. Geräteanordnung nach Anspruch 3 oder 4 mit einer leitungsgebundenen Datenverbindung zwischen dem PC-basierten Gerät (10) und dem Peripheriegerät, wobei in den dem Absatz (16) fernen Bereich des PC-basierten Gerätes (10) ein von der Haube (12) überdeckbarer oder überdeckter Kabelkanal (30) eingeformt ist, durch welchen hindurch eine Datenleitung des Peripheriegerätes zu einem Datenstecker des PC-basierten Gerätes (10) geführt werden kann.

8. Geräteanordnung nach einem der vorhergehenden Ansprüche, bei dem wenigstens zwei Peripheriegeräte (46, 48) nebeneinander auf dem Absatz (16) angeordnet sind.

9. Geräteanordnung nach einem der vorhergehenden Ansprüche, bei der das Peripheriegerät ein Sichtgerät (54) oder ein Drucker (46, 52) oder ein Belegleser (48) oder eine Tastatur (42) ist.

10. Geräteanordnung nach einem der vorhergehenden Ansprüche, bei der auf dem Absatz (16) bei den Seitenwänden des PC-basierten Gerätes (10) je ein Lautsprecher (44) angeordnet ist.

11. Geräteanordnung nach einem der vorhergehenden Ansprüche, wobei das PC-basierte Gerät (10) mit seiner Basisplatte (20) auf einem Tisch aufstellbar ist und die erste Fläche (18) des Absatzes (16) die Stützfläche für das Zusatzgehäuse (46'; 48') ist.

12. Geräteanordnung nach einem der Ansprüche 1 bis 10, wobei das PC-basierte Gerät (10) mit seiner Basisplatte (20) an einer vertikalen Fläche (50) befestigbar ist und die zweite Fläche (22) des Absatzes (16) die Stützfläche für das Zusatzgehäuse (52') ist.

13. Geräteanordnung nach einem der vorhergehenden Ansprüche, bei der das wenigstens eine Peripheriegerät (44, 46, 48; 52) über eine lösbare Verriegelungseinrichtung auf der dieses stützenden Fläche (18; 22) des Absatzes (16) fixierbar ist.
